# EUROPEAN PATENT APPLICATION

(11) **EP 2 915 769 A1**
(43) Date of publication of application: **09.09.2015**
(21) Application number: 14157552.2
(22) Date of filing: 04.03.2014
(51) Int. Cl.: B66D 1/12, B66F 9/24

(54) **Lifting/skidding device with a permanent magnet synchronous motor**

(71) Applicant: Siemens Aktiengesellschaft, 80333 München (DE)
(72) Inventor: Hooymans, Rick, 2631 LH Nootdorp (NL); van der Does, Taco, 2264 SH Leidschendam (NL); van der Groep, Rogier, 2264 LC Leidschendam (NL)

(57) **Abstract**

It is described a lifting/skidding device (1), comprising an electric motor (8), a gear (14) coupled to said motor (8) and a lifting/skidding mechanism (7) coupled to said gear (14), wherein said motor (8) is embodied as a permanent magnet synchronous machine. Furthermore, a usage of the lifting/skidding device (1) for lifting/skidding an offshore construction is disclosed.

## Description

### Field of invention

The present invention relates to a lifting/skidding device, comprising an electric motor, a gear coupled to said motor and a lifting/skidding mechanism coupled to said gear. Moreover, the present invention relates to a usage of a lifting/skidding device of the kind above.

### Art Background

A lifting/skidding device and a usage as presented above are generally known. An electrically driven hoisting or jacking system generally is used to lower, to lift / hoist (vertical movement) and/or to pull or to tow (horizontal movement) objects. For example, rack and pinion jacking drives or hoist ropes wound around a driven hoist drum may be used for that reason. Particularly, in case of high loads, a gear with a comparably large gear ratio is used to bridge the speed difference between the pinion or drum and a standard induction machine. Often a combination of planetary gear and spur gear is used to accomplish the desired gear ratio. The resulting dimensions and the weight of the motor gear units as well as their shape are disadvantageous, especially in offshore environments.

Accordingly, there is a need to provide a lifting/skidding device, which overcomes the drawbacks mentioned above.

### Summary of the Invention

This need may be met by the subject matter according to the independent claims. Advantageous embodiments of the present invention are described by the dependent claims.

According to a first aspect of the invention, there is provided a lifting/skidding device as disclosed in the opening paragraph, wherein said motor is embodied as a permanent magnet synchronous machine.

Moreover, there is provided a usage of a lifting/skidding device of the kind above for lifting and/or skidding an offshore construction, i.e. to move it vertically and/or horizontally.

These aspects of the invention are based on the idea that a permanent magnet synchronous machine (PMSM) delivers high torque at lower speeds, thereby significantly reducing the required gearbox ratio. In turn this allows for a compact construction of a lifting/skidding device with reduced weight, size and a beneficial shape, which is particularly advantageous for use of the lifting/skidding devices in the offshore environment (for example: drilling rig, windmill installation vessel, hoist ship, etc.).

The permanent magnet synchronous motor is superior to induction machines both in torque per kilograms and efficiency. Moreover, the use of the comparably small permanent magnet synchronous motor provides the advantage of reduced rotating masses, reduced mechanical losses and in turn improved efficiency as well as a reduced number of unit parts. Usually, a separate additional spur gear may be omitted in most applications. It should be noted, that the permanent magnet synchronous motor may be constructed in different ways to suit the demands of the lifting/skidding device. For example, the rotor may be arranged inside of the stator. However, the rotor may also be arranged outside of the rotor depending on the construction of the lifting/skidding device.

According to a further embodiment of the invention, said motor and an output of said gear are arranged co-axially. In this way, a very beneficial shape of the resulting motor gear unit and of the lifting/skidding device may be obtained.

In this context it is beneficial, if the gear is embodied as a planetary gear, which is a proven device for realizing a coaxial arrangement of a gear input and output. However, also the use of a spur gear is conceivable.

In this context it is further advantageous, if said planetary gear is the only gear between said motor and said lifting/skidding mechanism. In this way, an even more advantageous shape (basically a cylindrical shape) of the resulting motor gear unit may be obtained.

According to another embodiment of the invention, said motor and said gear are arranged in a single housing or said motor/gear is arranged in the housing of said gear/motor. Thus, a compact motor gear unit is obtained. Furthermore, the housing(s) may also act as a heat transfer body, respectively as heat transfer bodies between the motor and the gear. Accordingly, heating/cooling the motor gear unit may be accomplished by just one heater/cooler. A further advantage of the combined motor gear unit is the reduced number of parts. For example bearings and seals may commonly used for both the motor and the gear.

According to yet another embodiment said motor and said gear comprise a common lubrication circuit. In this way, the lubrication oil of the gearbox acts as heat transfer medium for the motor.

In this context it is advantageous if the lifting/skidding device comprises a heater in the lubrication circuit. In this way, the lubrication oil heater functions as an indirect standstill heater of the motor.

According to another embodiment of the invention, the lifting/skidding mechanism comprises a pinion coupled to said gear and a gear rack engaged with said pinion. For example, a platform may be connected to the gear racks of several lifting/skidding devices and may be moved upwards and downwards respectively horizontally by activating the motor.

According to yet another embodiment of the invention, the lifting/skidding mechanism comprises a hoist drum coupled to said gear. For example, a platform connected to a rope, which is wound around said hoist drum may be moved upwards and downwards respectively horizontally by activating the motor.

Generally, it is of advantage, if the lifting/skidding device respectively its motor is torque controlled, which results in smoother operation and longer lifetime of mechanical parts.

It has to be noted that embodiments of the invention have been described with reference to different subject matters. However, a person skilled in the art will gather from the above and the following description that, unless other notified, in addition to any combination of features belonging to one type of subject matter also any combination between features relating to different subject matters is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows a schematic oblique view of an exemplary lifting/skidding device with a rack and pinion gear;
Figure 2 shows an exploded view of the inner workings of the motor gear unit and
Figure 3 shows a schematic oblique view of an exemplary lifting/skidding device with a hoist drum.

### Detailed Description

The illustration in the drawing is schematically. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

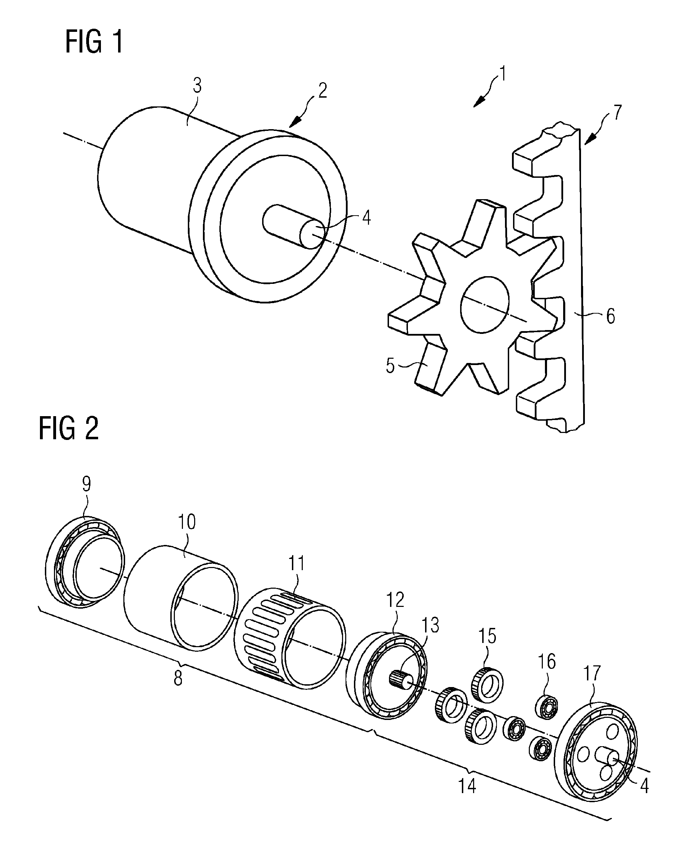

Fig. 1 shows a schematic oblique view of an exemplary lifting/skidding device 1, comprising a motor gear unit 2 with a housing 3 and a gear output 4. Furthermore the lifting/skidding device 1 comprises a pinion 5 coupled to the motor gear unit 2 by means of the gear output 4 and a gear rack 6 engaged with said pinion 5. The pinion 5 and the gear rack 6 are part of a lifting/skidding mechanism 7. For example, a platform (not shown) may be connected to the gear racks 6 of several lifting/skidding devices 1 and moved upwards and downwards respectively horizontally by activating the motor gear unit 2. In Fig. 1, the pinion 5 is taken off the gear output 4. However, in the operating state of the lifting/skidding device 1 the pinion 5 is mounted on the gear output 4 of course.

Fig. 2 now shows an exploded view of the inner workings of the motor gear unit 2. Concretely, Fig. 2 shows an electric motor 8, comprising a bearing 9 on the non driven end, a motor stator core 10, a motor rotor 11, a bearing 12 and a sun gear 13. Furthermore, Fig. 2 shows a gear 14, comprising planetary gears 15, bearings 16, a combined planet carrier and bearing 17, and the gear output 4 fixed to the planet carrier 17. In the above listing, the bearing 12 and the sun gear 13 are associated with the motor 8. However, the bearing 12 and the sun gear 13 may also associated with the gear 14 or both the motor 8 and the gear 14. Furthermore, the bearing 9 on the non driven end may also be omitted. The arrangement of Fig. 2 is built into the housing 3 of the motor gear unit 2 shown in Fig. 1 in its operational state.

Accordingly, Figs. 1 and 2 show a lifting/skidding device 1, comprising, the electric motor 8, the gear 14 coupled to said motor 8 and the lifting/skidding mechanism 7 coupled to said gear 14. The motor 8 is embodied as a permanent magnet synchronous machine, which delivers high torque at comparably low speeds, thereby reducing the required gearbox ratio significantly with respect to known arrangements comprising a standard induction machine. Moreover, the permanent magnet synchronous motor 8 is superior to induction machines with respect to efficiency.

In the example shown in Figs. 1 and 2, the motor 8 and the output 4 of said gear 14 are arranged co-axially. This is accomplished by using the planetary gear 14. In this example, the planetary gear 14 is the only gear between said motor 8 and said lifting/skidding mechanism 7. The planetary gear may also have additional reduction stages. Finally, other additional gears may be used as the case may be, for example spur gears.

The permanent magnet synchronous motor 8 allows for a compact construction of the lifting/skidding device 1. It consists of comparably few parts and can be integrated as part of the construction of the gearbox itself. Hence, said motor 8 and said gear 14 are arranged in a single housing 3 in the example shown in Figs. 1 and 2. However a motor 8 having a dedicated housing may also be arranged in the housing of said gear 14 or vice versa. Generally, the housing of the gear 14 acts as a heat transfer body for the motor 8 in the presented compact design.

In an advantageous embodiment, the lifting/skidding device 1 comprises a common lubrication circuit for said motor 8 and said gear 14. In this way, the lubrication oil of the gearbox acts as heat transfer medium for the motor 8. In this context, it is of particular advantage, if the lifting/skidding device 1 comprises a heater in said lubrication circuit. In this way, the lubrication oil heater functions as indirect standstill heater of the motor 8.

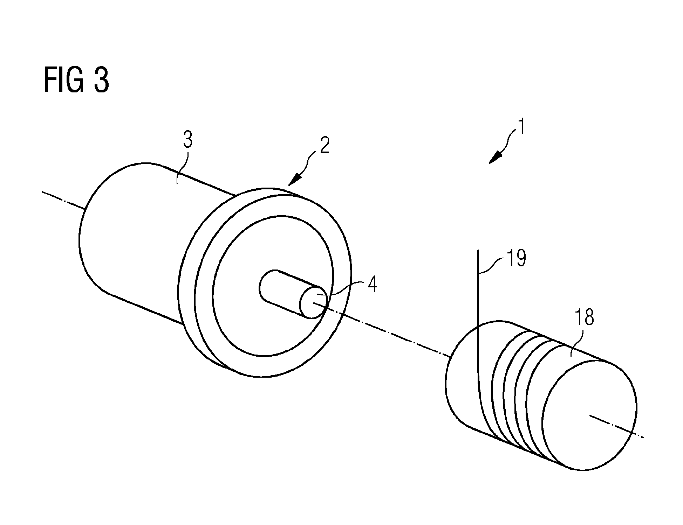

In the example disclosed above, the lifting/skidding mechanism 7 comprises the pinion 5 coupled to the gear 14 and the gear rack 6 engaged with said pinion 5. However, this is not the only possibility for a lifting/skidding mechanism 7. The lifting/skidding mechanism 7 may also comprise a hoist drum coupled to said gear 14 for example as shown in Fig. 3. A hoist rope 19, wound around the hoist drum 18 may then be used to move objects.

In applications including but not limited to the lifting/skidding device 1 can be used for lifting/skidding an offshore construction (for example: drilling rig, windmill installation vessel, hoist ship etc.). The reduced size and weight of the presented lifting/skidding device 1 as well as its beneficial shape makes it particularly usable in offshore environments.

Advantageously, the lifting/skidding device 1 is torque controlled, which results in smoother operation and longer lifetime of mechanical parts.

Generally, the usage of the permanent magnet synchronous motor 8 provides:
- reduced size and weight
- a beneficial shape
- reduced mechanical losses and in turn improved efficiency
- reduced number of parts
- reduced rotating masses, in particular if additional spur gears may be omitted.

Finally, it should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. Lifting/skidding device (1), comprising
- an electric motor (8),
- a gear (14) coupled to said motor (8) and
- a lifting/skidding mechanism (7) coupled to said gear (14),
wherein
said motor (8) is embodied as a permanent magnet synchronous machine.

2. Lifting/skidding device (1) as claimed in claim 1, wherein said motor (8) and an output (4) of said gear (14) are arranged co-axially.

3. Lifting/skidding device (1) as claimed in claim 2, wherein said gear (14) is embodied as a planetary gear.

4. Lifting/skidding device (1) as claimed in claim 3, wherein said planetary gear (14) is the only gear between said motor (8) and said lifting/skidding mechanism (7).

5. Lifting/skidding device (1) as claimed in any one of the claims 1 to 4, wherein said motor (8) and said gear (14) are arranged in a single housing (3) or said motor (8)/gear (14) is arranged in the housing of said gear (14)/motor (8).

6. Lifting/skidding device (1) as claimed in any one of the claims 1 to 5, wherein said motor (8) and said gear (14) comprise a common lubrication circuit.

7. Lifting/skidding device (1) as claimed in claim 6, comprising a heater in the lubrication circuit.

8. Lifting/skidding device (1) as claimed in any one of the claims 1 to 7, wherein the lifting/skidding mechanism (7) comprises a pinion (5) coupled to said gear (14) and a gear rack (6) engaged with said pinion (5).

9. Lifting/skidding device (1) as claimed in any one of the claims 1 to 7, wherein the lifting/skidding mechanism (7) comprises a hoist drum (18) coupled to said gear (14).

10. Usage of a lifting/skidding device (1) as claimed in any one of the claims 1 to 9 for lifting/skidding an offshore construction.
